# EUROPEAN PATENT APPLICATION

(11) **EP 4 800 270 A1**
(43) Date of publication of application: **02.09.2026**
(21) Application number: 26159218.2
(22) Date of filing: 18.02.2026
(51) Int. Cl.: F16J 15/02, G03B 17/08, G03B 17/02, G03B 17/12, G08B 13/196, H04N 23/51, H04N 23/55

(54) **CAMERA WITH SEALED HOUSING**

(30) Priority: 27.02.2025 US 202519065350
(71) Applicant: Arlo Technologies, Inc., Carlsbad, CA 92008 (US)
(72) Inventor: Yim, David, Carlsbad, CA 92008 (US); Zehfus, Corey, Oceanside, CA 92054 (US); Stefansson, Erik, Carlsbad, CA 92009 (US)
(74) Representative: Grünecker Patent- und Rechtsanwälte PartG mbB

(57) **Abstract**

A seal for a camera is provided. The camera includes a lens assembly, a support for supporting the lens within a housing having a cover. The seal is positionable about an outer surface of the lens. The seal body includes an outer radial surface and an inner radial surface that is radially spaced from the outer surface of the lens assembly housing with the seal body positioned thereabout. A tab projects radially inward from the inner radial surface of the seal body and is engageable with the outer radial surface of the lens assembly housing with the seal body positioned thereabout. A sealing wall projects radially outward from the outer radial surface of the seal body and is captured between the cover of the housing and the lens support.

## Description

### FIELD OF THE INVENTION

The invention relates generally to cameras for electronic monitoring systems, and in particular, to a camera having a seal that minimizes unwanted forces on the camera's lens assembly while inhibiting water, dust, etc. from entering the interior of camera's housing. The method additionally relates to a seal for such a camera and a method of sealing a lens assembly in a camera housing.

### BACKGROUND OF THE INVENTION

Modern electronic monitoring systems for the home often include one or more imaging devices, typically each including a camera, such as a video recorder. Each camera includes a lens housed in a camera housing. The lens transmits images of a corresponding monitored area or "activity zone" within the camera's two-dimensional ("XY") visual field of view to the camera's controller for further processing.

The activity zone and the corresponding area of interest may comprise the entire field of view of the imaging device but, more typically, comprises a portion of the field of view. Hence, in the simplest case of a rectangular activity zone within a rectangular field of view, the activity zone typically encompasses a smaller area "xy" contained within the larger area XY of the imaging device's field of view which, again, corresponds to the camera's field of view. A triggering event, most typically motion detection, in the monitored activity zone, triggers image capture and related functions, while motion outside of the activity zone does not. Hence, the proper functioning of all of the components of the camera, including the lens of the camera, is necessary to ensure the proper operation of the electronic monitoring system.

The typical camera includes a housing and a lens assembly supported in the housing. The camera housing defines an interior space that is bordered in front by a front cover. The interior space houses internal electronics including a controller provided on circuit board and a lens assembly. The lens assembly includes a front lens element and a tubular, typically cylindrical, lens assembly housing that is supported in the camera housing. The lens element typically lies in an XY plane parallel with the surrounding portion of the front wall of the camera housing.

The cameras of the electronic monitoring system are often positioned outdoors, thereby exposing the cameras to the elements. In order to inhibit the external elements such as rain, sand, dirt, and insects for entering the housing of the camera and damaging the internal components thereof, a seal is provided between the outer radial surface of the lens assembly housing and the front cover of the camera housing. Typically, the seal takes the form of a rubber gasket that extends about the outer surface of the lens assembly housing and that is compressed between lens housing and a front cover of the housing of the camera. While such a sealing arrangement prevents the elements from entering the housing of the camera, these prior seals have certain disadvantages. For example, compression of the seal between the lens housing and the front cover of the housing imposes forces on the lens in the XY plane from the front view. These forces can adversely affect the performance of the lens by skewing the lens so that the lens element no longer lies in the desired plane and/or is no longer located at the desired XY position.

Therefore, it is a primary object and feature of the present invention to provide a seal for a camera of an electronic monitoring system that minimizes the imposition unwanted forces on the camera's lens assembly.

It is a still further object and feature of the present invention to provide a seal for a camera of an electronic monitoring system that protects the internal components of the camera from external elements.

It is a still further object and feature of the present invention to provide a seal for a camera of an electronic monitoring system that is simple to implement and inexpensive to manufacture.

### SUMMARY OF THE INVENTION

In accordance with an aspect of the present invention, a seal for a camera is provided. The camera includes a housing having a cover, a lens assembly, and a lens support for supporting the lens assembly within the camera housing. The seal includes a generally cylindrical seal body extending along an axis and being positionable about an outer radial surface of a housing of the lens assembly. The seal body includes an outer radial surface and an inner radial surface that is configured to be radially spaced from the outer radial surface of the lens assembly housing. A tab projects radially inward from the inner surface of the seal body. The tab is engageable with the outer radial surface of the lens assembly housing with the seal body positioned thereabout. A sealing wall projects radially outward from the outer radial surface of the seal body, the sealing wall configured to be received between the cover of the housing and the lens support.

The tab is generally cylindrical and the seal may include a second tab projecting radially inward from the inner surface of the seal body at a location axially spaced from the first tab. The second tab is also engageable with the outer radial surface of the lens assembly housing with the seal body positioned thereabout. The seal body includes a first axial end and a second axial end directed toward an interior of the camera housing. The inner surface of the seal body has a generally conical configuration at a location adjacent the first end thereof. the sealing wall has a radially inner end operatively connected to the seal body at a location adjacent to the second axial end of the seal body.

The inner end of the sealing wall may be interconnected to the seal body by a connector. The connector may have a generally C-shaped cross-section, a first end operatively connected to the inner end of the sealing wall and a second end connected to the seal body at a location adjacent to the second axial end of the seal body. The seal body has a thickness and the connector has a thickness. The thickness of the body is greater than the thickness of the connector. Alternatively, the sealing wall may be operatively connected to the seal body at an intersection wherein the intersection has a thickness less than a thickness of the sealing wall.

In accordance with a further aspect of the present invention, a camera is provided. The camera includes a housing having an interior and a forward opening for providing access to the interior of the housing. The housing includes a cover positionable over the forward opening in the housing, a passage being formed through the cover and being bordered by an inwardly projecting flange terminating at an end surface. A lens assembly includes a tubular housing having front and rear ands and includes a lens element disposed at the front end of the lens assembly housing. The lens assembly housing is disposed within the interior of the housing and has a forward end received in the passage through the camera housing. A seal includes a generally cylindrical seal body extends along an axis and extends about an outer radial surface of the lens assembly housing. The seal body includes an inner radial surface being radially spaced from the outer surface of the lens assembly housing and an outer radial surface. A cylindrical tab projects radially inward from the inner surface of the seal body. The tab engages the outer radial surface of the lens assembly housing. A sealing wall projects radially outward from the outer radial surface of the seal body. The sealing wall is configured to be received between the end surface of the flange of the cover of the housing and the lens support.

The tab may be a first tab and a second tab may project radially inwardly from the inner radial surface of the seal body at a location axially spaced from the first tab. The second tab engages the outer radial surface of the lens assembly body. The inner surface of the seal body has a generally conical configuration adjacent a first end of the seal body. A sealing wall projects radially outward from the outer radial surface of the seal body. The sealing wall is received between the flange of the cover and the lens support. The seal body includes a first axial end and a second axial end. The second axial end directed toward an interior of the housing. The sealing wall has a radially inner end operatively connected to the seal body at a location adjacent to the second axial end of the seal body.

The inner end of the sealing wall may be interconnected to the seal body by a connector. The connector has a generally C-shaped cross-section, a first end operatively connected to the inner end of the sealing wall and a second end connected to the seal body at a location adjacent to the second axial end of the seal body. The seal body has a thickness and the connector has a thickness. The thickness of the body is greater than the thickness of the connector. Alternatively, the sealing wall is operatively connected to the seal body at an intersection, the intersection having a thickness less than a thickness of the sealing wall.

In accordance with a still further aspect of the present invention, a method of sealing an external environment from an interior of a camera is provided. The method includes the step of supporting a lens assembly within a camera housing with a lens support. The lens assembly includes a tubular housing having front and rear ends, and a lens element disposed at the front end of the lens assembly housing. A seal is positioned over an outer radial surface of the lens assembly housing. The seal includes a generally cylindrical seal body having an outer radial surface and an inner radial surface radially spaced from the outer radial surface of the lens assembly housing. A cylindrical tab projects radially inward from the inner radial surface of the seal body. The tab engages the outer radial surface of the lens assembly housing. A sealing wall projects radially outward from the outer radial surface of the seal body. A camera housing cover is positioned over a forward opening in the camera housing. The camera housing cover includes an inwardly projecting flange terminating at an end surface and having a passage formed therethrough for receiving a forward end of the lens assembly housing therein. The sealing wall is between the end surface of the flange of the camera housing cover and the lens support.

The sealing wall has a radially inner end that may be interconnected to the seal body by a connector. The connector has a generally C-shaped cross-section, a first end operatively connected to the inner end of the sealing wall and a second end connected to the seal body. The seal body has a thickness and the connector has a thickness. The thickness of the body is greater than the thickness of the connector. Alternatively, the sealing wall is operatively connected to the seal body at an intersection. The intersection has a thickness less than a thickness of the sealing wall.

These and other features and advantages of the invention will become apparent to those skilled in the art from the following detailed description and the accompanying drawings. It should be understood, however, that the detailed description and specific examples, while indicating preferred embodiments of the present invention, are given by way of illustration and not of limitation. Many changes and modifications may be made within the scope of the present invention without departing from the spirit thereof, and the invention includes all such modifications.

### BREIF DESCRIPTION OF THE DRAWINGS

Preferred exemplary embodiments of the invention are illustrated in the accompanying drawings in which like reference numerals represent like parts throughout, and in which:
FIG. 1 is an isometric view of a camera incorporating a seal in accordance with the present invention;
FIG. 2 is an exploded view of showing a portion of the camera of FIG. 1;
FIG. 3 is an isometric view of a seal in accordance with the present invention;
FIG. 4 is a front elevational view of the seal of FIG. 3;
FIG. 5 is a rear elevational view of the seal of FIG. 3;
FIG. 6 is a side elevational view of the seal of FIG. 3;
FIG. 7 is a cross-sectional view of the seal of the present invention take along line 7-7 of FIG. 4;
FIG. 8 is cross-sectional view showing a portion of the camera of FIG. 1;
FIG. 9 is an isometric view of an alternate configuration of a seal in accordance with the present invention;
FIG. 10 is a front elevational view of the seal of FIG. 9;
FIG. 11 is a rear elevational view of the seal of FIG. 9;
FIG. 12 is a side elevational view of the seal of FIG. 9;
FIG. 13 is a cross-sectional view of the seal of the present invention take along line 13-13 of FIG. 10; and
FIG. 14 is cross-sectional view showing a portion of the camera of FIG. 1 incorporating the seal of FIG. 9.

### DETAILED DESCRIPTION OF THE DRAWINGS

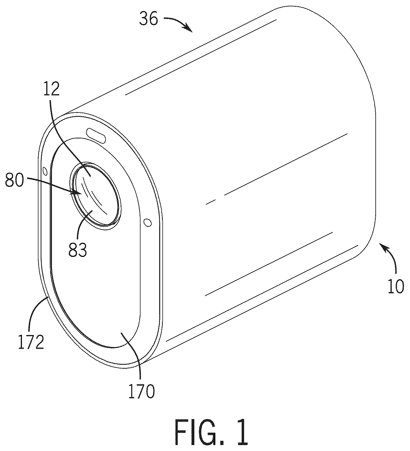

Referring to FIGS. 1-2, a camera for use in connection with an electronic monitoring system is generally designated by the reference numeral 10. As is conventional, camera 10 is configured to perform any of a variety of monitoring, sensing, and communicating functions, including acquiring data, processing the acquired data, and transmitting the processed acquired data to a base station for further processing and/or transmission to a server and/or a user device, such a cellular phone, tablet, laptop or the like. Camera 10 may be battery powered or wired. The electronic monitoring system may include several such cameras 10, which may be mounted around a building or other structure or area being monitored. For example, in the case of a residential home, cameras 10 could be mounted by each entrance, selected windows, and even on a gate or light pole. Camera 10 also could be incorporated into or coupled to a doorbell, floodlight, etc. to monitor a designated area or activity zone such as a home, office, industrial or commercial building, yard, parking or storage lot, etc.

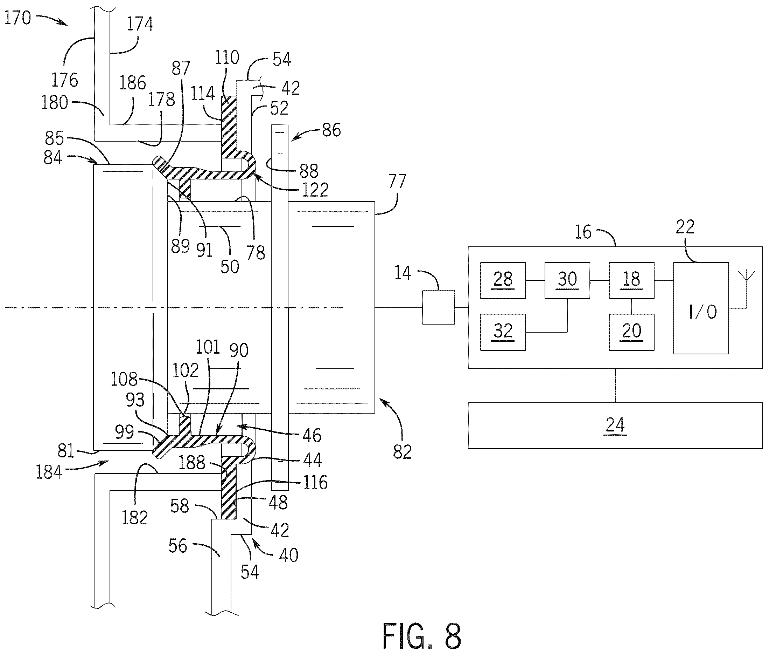

As best seen in FIG. 8, camera 10 includes a lens assembly, generally designated by the reference numeral 12. Lens assembly 12 focuses light onto image sensor 14 that, in turn, converts light into electrical signals. The electrical signals are transmitted to controller 16 having a processor 18 and non-transient memory storage, such as nonvolatile memory 20, and/or an I/O communication device 22, among other things, to effectuate the monitoring function of the electronic monitoring system. Camera 10 may also include a microphone, visible and/or infrared (IR) lights, a power supply 24 such as a battery or battery pack, and/or electronic circuitry, such as audio circuit 28, and media encoder 30, among other things, operatively connected to controller 16. In addition, camera 10 may include one or more sensors configured to detect one or more types of conditions or stimulus, for example, motion, opening or closing events of doors or windows, sounds such as breaking glass or gunshots, the presence of smoke, carbon monoxide, water leaks, and temperature changes. Camera 10 may further include or be other devices such as audio devices, including microphones, sound sensors, and speakers configured for audio communication or providing audible alerts, such as Arlo ChimeTM audible devices.

Camera 10 communicates with the other components of the electronic monitoring system over a network through a wireless I/O communication device 22. The network could be in whole or in part a wired network, a wireless network, or a combination thereof. For example, the network may include a private Wireless Local Area Network (WLAN), hosted by a base station operating as an access point. One such network is an IEEE 802.11 network.

Referring back to FIGS. 1-2 and 8, in the depicted embodiment, camera 10 is incorporated into interior 34 of a camera housing 36. However, camera 10 may be incorporated into form factors of other house or building accessories, such as doorbells, floodlights, etc., each which may be available on a stand-alone basis or as part of any of a number of systems available from Arlo Technologies, Inc. of Carlsbad, California, without deviating from the scope of the present invention.

As best seen in FIG. 8, lens support 40 is receivable in interior 34 of housing 36 and interconnected to housing 36 in any conventional matter, such as by screws or other fasteners or by thermal bonding. Lens support 40 includes sidewall 42 having a radially inner edge 44 defining opening 46 centered on axis 50 for allowing lens assembly 12 to pass therethough. Axis 50 typically extends in Z, or perpendicular to the XY plane. Sidewall 42 includes a forwardly directed surface 48, a rearward directed surface 52, and a radially outer edge 54. Support wall 56 extends radially away from axis 50 and is interconnected to forwardly directed surface 48 of sidewall 42 at a location adjacent to radially outer edge 54. Support wall 56 lies in a plane which is parallel to the plane of sidewall 42 and includes a radially inner edge defining shoulder 58 in lens support 40.

Lens assembly 12 includes a tubular housing 77 having front and rear ends 80 and 82 and an outer radial surface 78. Front end 80 includes an enlarged head 81 housing a forward facing lens element 83, typically formed of glass or a clear plastic. The lens 83 typically lies in or parallel to the XY plane. Head 81 includes a radially outer surface 85 interconnected to outer radial surface 78 of tubular housing 77 by inner face 87. Inner face 87 includes a first portion 89 extending radially from outer radial surface 78 of tubular housing 77 and terminating at a radially outer edge 91. Outer edge 91 of first portion 89 of inner face 87 is interconnected to radially outer surface 85 of head 81 by chamfered portion 93 of inner face 87.

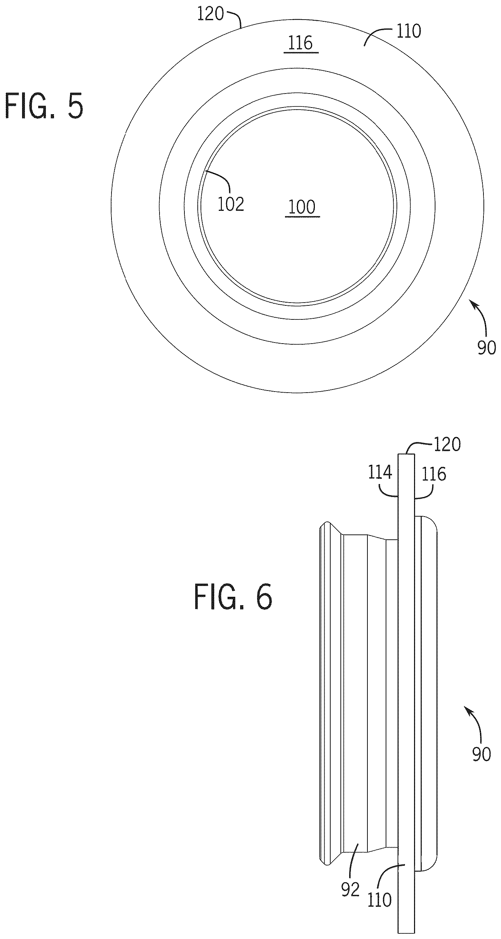

As best seen in FIG. 6, lens assembly housing 77 is received in opening 46 in lens support 40. The front end 80 projects forwardly from forwardly directed surface 48 of sidewall 42 of lens support 40, and the rear end 82 is disposed within interior 34 of housing 36. Alignment flange 86 projects radially from outer radial surface 78 of tubular housing 77 and forward face 88 directed at rearward directed surface 52 of sidewall 42 of lens support 40 with lens assembly housing 77 received in opening 46 of lens support 40. It can be appreciated that alignment flange 86 limits movement of lens assembly 12 relative to sidewall 42 of lens support 40 with lens assembly housing 77 received in opening 46 through lens support 40.

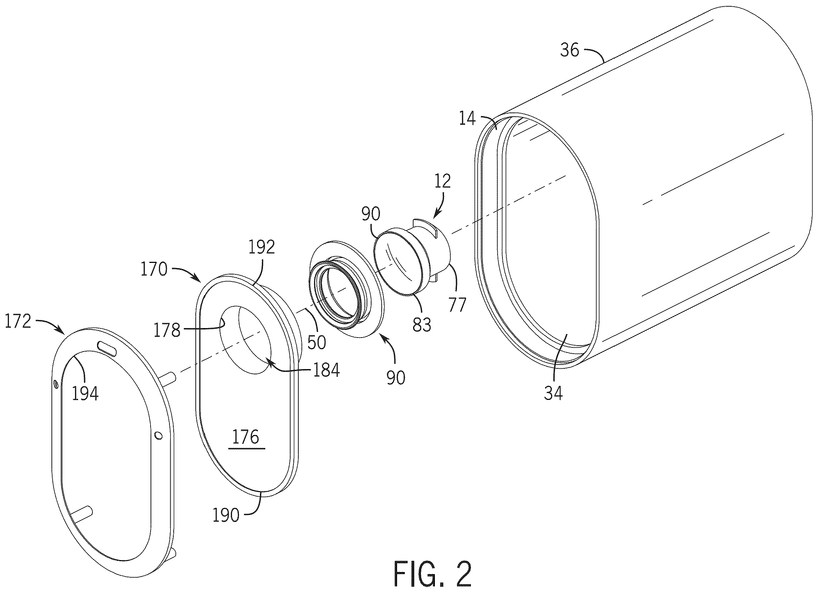

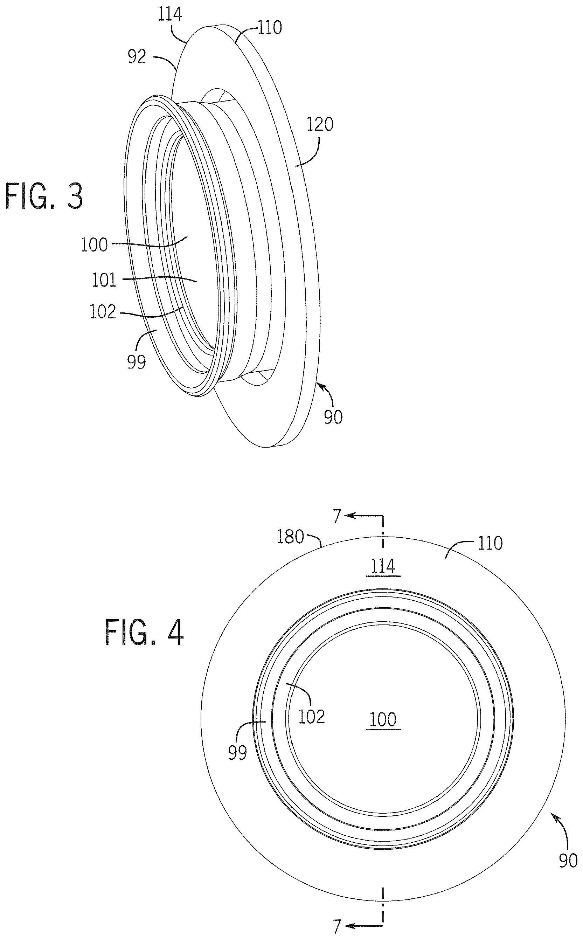

Referring to FIGS. 2-8, seal 90 is positioned about outer surface 78 of lens assembly 12 to further support lens assembly housing 77 within interior 34 of housing 36 and to prevent dirt, debris and other external elements from entering interior 34 of housing 36 between outer surface 78 of lens assembly housing 77 and inner edge 44 of of sidewall 42 of lens support 40 through opening 46. More specifically, seal 90 includes a generally cylindrical seal body 92 extending along axis 50. Seal body 92 includes a forward end 94 and a rear end 96. An inner radial surface 98 extends axially between the forward and rearward ends 94 and 96, respectively, of seal body 92 and defines a passageway 100 extending axially through seal 90 which is adapted for receiving lens assembly housing 77 therethrough. Inner radial surface 98 of seal body includes a first portion 99 having a generally conical configuration extending from the forward end 94 and a second portion 101 extending rearwardly therefrom. First portion 99 of inner radial surface 98 of seal body 92 engages and forms a sealing interface with chamfered portion 93 of inner face 87 of tubular housing 77 of lens assembly 12 to preventing dirt, debris and other external elements from entering interior 34 of housing 36 therebetween.

Seal 90 further includes generally cylindrical, ring-shaped, tab 102 extending from second portion 101 of inner surface 98 of seal body 92 at a location spaced from forward end 94 of seal body 92 and is defined by first and second generally parallel sides 104 and 106, respectively, interconnected by a terminal edge 108 which sealingly engages outer surface 78 of lens assembly housing 77 with lens assembly housing 77 received in passageway 100 to prevent dirt, debris and other external elements from entering interior 34 of camera housing 36 therebetween. It can be understood that the minimizing of the contact points between seal 90 and outer surface 78 of lens assembly housing 77 minimizes the application of unwanted forces on lens assembly 12 in the XY plane.

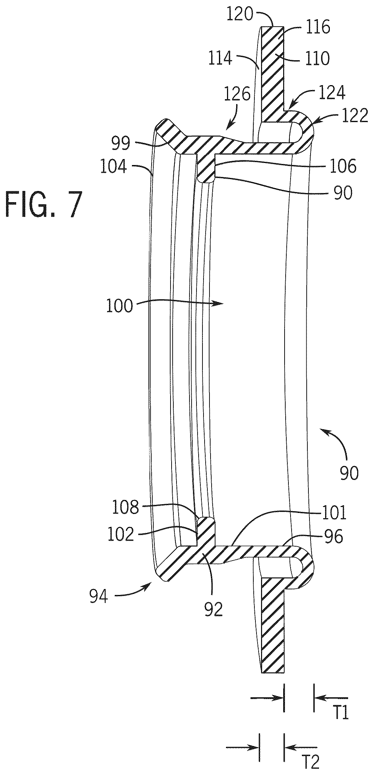

As best seen in FIG. 7-8, seal 90 further includes sealing wall 110 projects radially outward from the axis of passageway 100 through seal body 92 and is defined by forwardly directed face 114 and rearwardly directed face 116 which engages and forms a sealing interface with forwardly directed face 48 of sidewall 42 of lens support 40 that are interconnected by a radially outer edge 118 which engages and forms a sealing interface with shoulder 58 in lens support 40 and a radially inner edge 120. Forwardly directed face 114 and a rearwardly directed face 116 are generally parallel to each other. Sealing wall 110 is interconnected to seal body 92 by connector 122.

Connector 122 is generally C-shaped and includes a first end 124 interconnected to rearwardly directed face 116 at a location adjacent radially inner edge 120 and a second end 126 interconnected to rearward end 96 of seal body 92. Connector 122 has a thickness T1 which is less than the thickness T2 of sealing wall 110 and the thickness T3 of seal body 92 thereby allowing sealing wall 110 to move relative to seal body 92 while still preventing dirt, debris and other external elements from entering interior 34 of housing 36 between outer surface 78 of lens assembly housing 77 and inner edge 44 of of sidewall 42 of lens support 40 and minimizing the application of unwanted forces on lens assembly 12 in XY plane in response to movement of lens support 40 relative to lens assembly 12.

Referring to FIGS. 1-2 and 8, in order to further prevent dirt, debris and other external elements from entering interior 34 of housing 36, camera housing 36 includes a front cover 170 receivable in a panel 172. More specifically, cover 170 includes first surface 174 directed to interior 34 of housing 36 and a second surface 176. Cover 170 includes an inner edge 178 and a flange 180 projecting therefrom toward interior 34 of housing 36. Flange 180 includes a radially inner surface 182 extending from the inner cover surface 178 and defining a central aperture or passage 184 extending through cover 170 and being centered on axis 50. Flange 180 further includes a radially outer surface 186 extending from first surface 174 of cover 170. Flange 180 terminates at a terminal surface 188 which engages and forms a sealing interface with forwardly directed surface 114 of sealing wall 110 of seal 90 to prevent dirt, debris and other external elements from entering interior 34 of camera housing 36 between seal 90 and seal cover 170.

Cover 170 further includes an outer peripheral edge 190 having a flange 192 projecting radially therefrom. Panel 172 includes an inner peripheral edge portion 194 which overlaps flange 192. Panel 172 is connectable to housing 36 and/or lens support 40 in any conventional matter, such as by screws or the like so as to capture cover 170 between panel 172 and lens support 40. As panel 172 is interconnected to housing 36 and/or lens support 40, sealing wall 110 of seal 90 is compressed between terminal surface 188 of flange 180 and forwardly directed surface 114 of sealing wall 110 of seal 90. As sealing wall 110 of seal 90 is compressed, the configuration of connector 122 allows sealing wall 110 to expand without causing the application of unwanted forces on lens assembly housing 77 by seal 90 in XY plane.

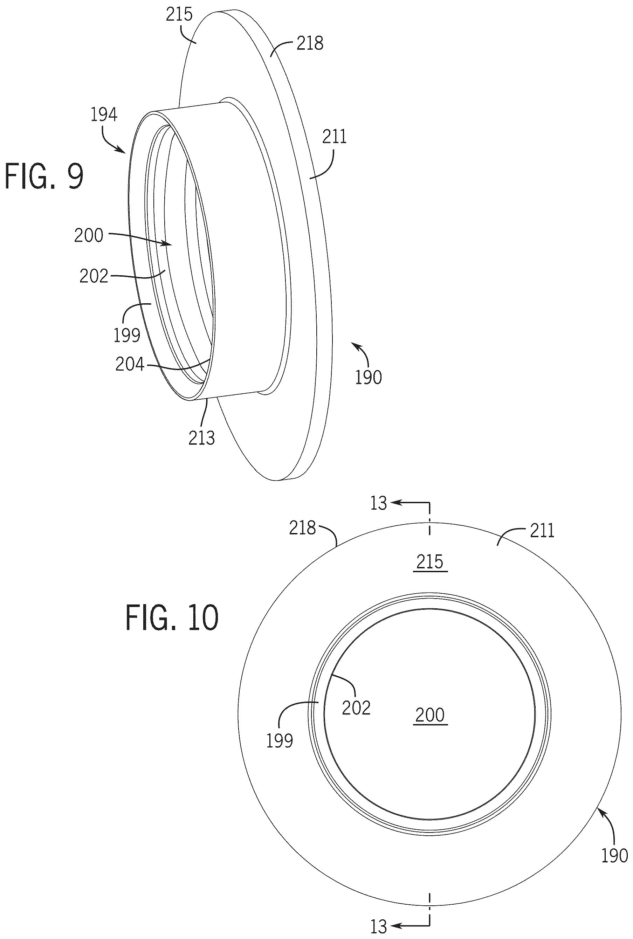

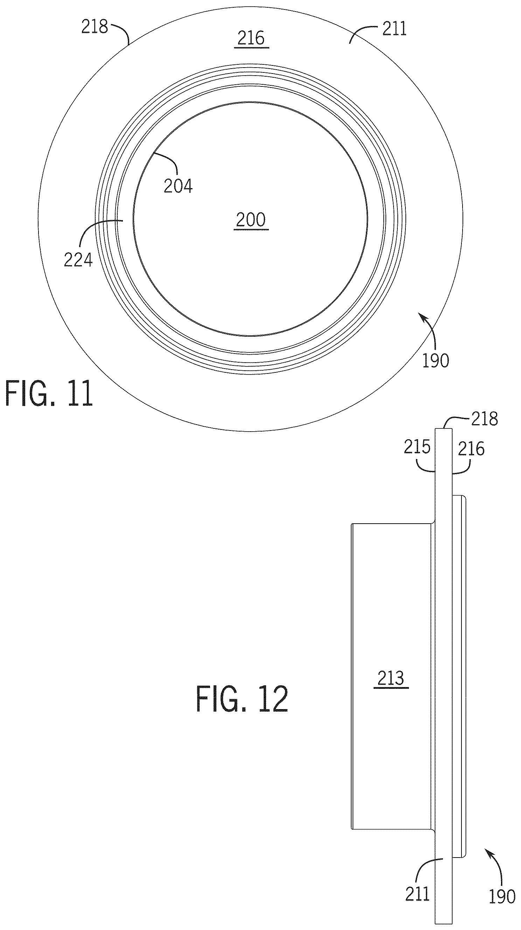

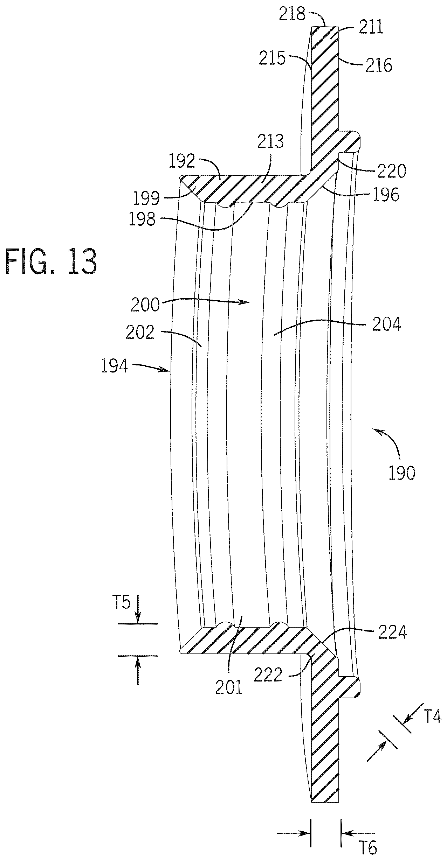

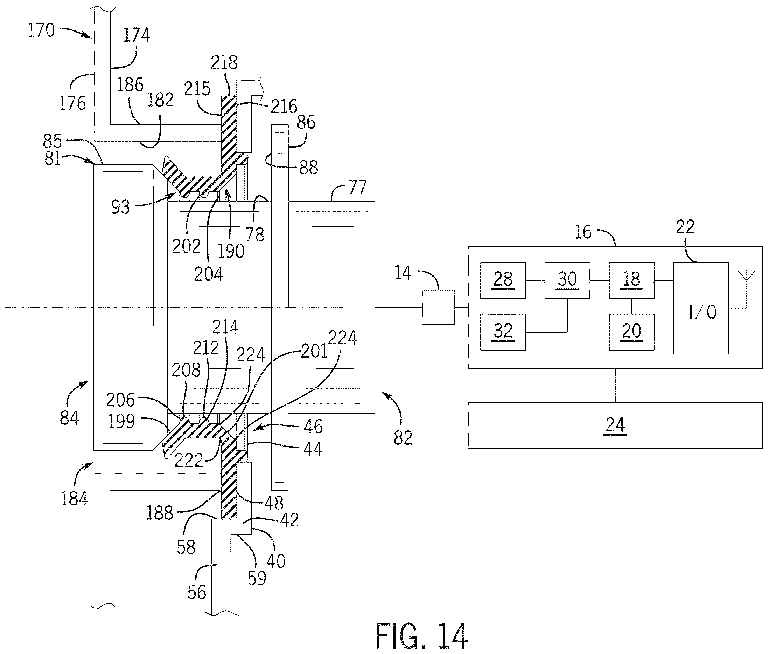

Referring to FIGS. 9-14, an alternative configuration of a seal in accordance with the present invention is generally designated by the reference number 190. Seal 190 may be positioned about outer surface 78 of lens assembly 12 to further support lens assembly housing 77 within interior 34 of housing 36 and to prevent dirt, debris and other external elements from entering interior 34 of housing 36 between outer surface 78 of lens assembly housing 77 and inner edge 44 of of sidewall 42 of lens support 40 through opening 46. More specifically, seal 190 includes a generally cylindrical seal body 192 extending along axis 50. Seal body 192 includes a forward end 194 and a rear end 196. An inner radial surface 198 extends axially between the forward and rearward ends 94 and 196, respectively, of seal body 192 and defines a passageway 200 extending axially through seal 190 which is adapted for receiving lens assembly housing 77 therethrough. Inner radial surface 198 of seal body includes a first portion 199 having a generally conical configuration extending from the forward end 194 and a second portion 201 extending rearwardly therefrom. First portion 199 of inner radial surface 198 of seal body 192 engages and forms a sealing interface with chamfered portion 93 of inner face 87 of tubular housing 77 of lens assembly 12 to preventing dirt, debris and other external elements from entering interior 34 of housing 36 therebetween.

Seal 190 further includes first and second generally convex tabs 202 and 204, respectively. First tab 202 extends from inner surface 198 of seal body 192 at a location spaced from forward end 194 of seal body 192 and is defined by convex surface 206 having an apex 208 which sealingly engages outer surface 78 of lens assembly housing 77 with lens assembly housing 77 received in passageway 100 to prevent dirt, debris and other external elements from entering interior 34 of camera housing 36 therebetween. Second tab 204 extends from the inner surface 198 of seal body 192 and is axially spaced from first tab 202 at a location between first tab 202 and read end 196 of seal body 192. Second tab 204 is defined by convex surface 210 terminating at apex 212 which sealingly engages outer surface 78 of lens assembly housing 77 with lens assembly housing 77 received in passageway 100 to prevent dirt, debris and other external elements from entering interior 34 of camera housing 36 therebetween.

Seal 190 further includes sealing wall 211 projecting radially from radially outer surface 213 of seal body 192 and is defined by forwardly directed face 215 and rearwardly directed face 216 which engages and forms a sealing interface with forwardly directed face 48 of sidewall 42 of lens support 40 that are interconnected by a radially outer edge 218 which engages and forms a sealing interface with shoulder 58 in lens support 40 and a radially inner edge 220. Forwardly directed face 215 and rearwardly directed face 216 are generally parallel to each other. Rearwardly directed face 216 of sidewall 211 is interconnected to second portion 201 of inner radial surface 198 of seal body 192 by chamfered surface 224 and forwardly directed face 215 of sidewall 211 is interconnected to radially outer surface 213 of seal body 192 so as to define intersection 222. Intersection 222 has a thickness T4 less than a thickness T5 of seal body 192 and a thickness T6 of sidewall 211 so as sealing wall 211 to move relative to seal body 192, thereby minimizing the application of unwanted forces on lens assembly 12 in XY plane in response to movement of lens support 40 relative to lens assembly 12.

Referring to FIGS. 1-2 and 14, cover 170 and panel 172 combination is interconnected to housing 36 and/or lens support 40, as described above, such that sealing wall 211 of seal 190 is compressed between terminal surface 188 of flange 180 and forwardly directed surface 215 of sealing wall 211 of seal 190. As sealing wall 211 of seal 190 is compressed, the configuration of intersection 222 allows sealing wall 211 to expand without causing the application of unwanted forces on lens assembly housing 77 by seal 90 in XY plane.

Although the best mode contemplated by the inventors of carrying out the present invention is disclosed above, practice of the above invention is not limited thereto. It will be manifest that various additions, modifications and rearrangements of the features of the present invention may be made without deviating from the spirit and the scope of the underlying inventive concept.

It should be appreciated that such a development effort might be complex and time consuming, but would nevertheless be a routine undertaking of design, fabrication, and manufacture for those of ordinary skill having the benefit of this disclosure. Nothing in this application is considered critical or essential to the present invention unless explicitly indicated as being "critical" or "essential."

## Claims

1. A seal for a camera, the camera including a housing having a cover, a lens assembly, and a lens support for supporting the lens assembly within the camera housing, the seal comprising:
a generally cylindrical seal body extending along an axis and being positionable about an outer radial surface of a housing of the lens assembly, the seal body including an outer radial surface and an inner radial surface that is configured to be radially spaced from the outer radial surface of the lens assembly housing;
a tab projecting radially inward from the inner surface of the seal body, the tab engageable with the outer radial surface of the lens assembly housing with the seal body positioned thereabout; and
a sealing wall projecting radially outward from the outer radial surface of the seal body, the sealing wall configured to be received between the cover of the housing and the lens support.

2. The seal of claim 1, wherein the tab is generally cylindrical.

3. The seal of claim 1 or 2, wherein the tab is a first tab, and further comprising a second tab projecting radially inward from the inner surface of the seal body at a location axially spaced from the first tab, the second tab engageable with the outer radial surface of the lens assembly housing with the seal body positioned thereabout.

4. The seal of any of the claims 1 to 3, wherein the seal body includes a first axial end and a second axial end directed toward an interior of the camera housing, the inner surface of the seal body having a generally conical configuration at a location adjacent the first end thereof.

5. The seal of any of the claims 1 to 4, wherein:
the seal body includes a first axial end and a second axial end, the second axial end directed toward an interior of the camera housing; and
the sealing wall has a radially inner end operatively connected to the seal body at a location adjacent to the second axial end of the seal body.

6. The seal of any of the claims 1 to 5, wherein the inner end of the sealing wall is interconnected to the seal body by a connector, the connector having a generally C-shaped cross-section, a first end operatively connected to the inner end of the sealing wall and a second end connected to the seal body at a location adjacent to the second axial end of the seal body.

7. The seal of any of the claims 1 to 6, wherein the seal body has a thickness and the connector has a thickness, the thickness of the body being greater than the thickness of the connector.

8. The seal of any of the claims 1 to 7, wherein the sealing wall is operatively connected to the seal body at an intersection, the intersection having a thickness less than a thickness of the sealing wall.

9. A camera, comprising:
a housing having an interior and including a forward opening for providing access to the interior of the housing, the housing including a cover positionable over the forward opening in the housing, a passage being formed through the cover and being bordered by an inwardly projecting flange terminating at an end surface,
a lens assembly including a tubular housing having front and rear ands and including a lens element disposed at the front end of the lens assembly housing, wherein the lens assembly housing is disposed within the interior of the housing and has a forward end received in the passage through the housing;
a seal including:
a generally cylindrical seal body extending along an axis and extending about an outer radial surface of the lens assembly housing, the seal body including an inner radial surface being radially spaced from the outer surface of the lens assembly housing and an outer radial surface;
a cylindrical tab projecting radially inward from the inner surface of the seal body, the tab engaging the outer radial surface of the lens assembly housing; and
a sealing wall projecting radially outward from the outer radial surface of the seal body, the sealing wall configured to be received between the end surface of the flange of the cover of the housing and the lens support.

10. The camera of claim 9, wherein the tab is a first tab, and further comprising a second tab projecting radially inwardly from the inner radial surface of the seal body at a location axially spaced from the first tab, the second tab engaging the outer radial surface of the lens assembly body.

11. The camera of claim 9 or 10, wherein the inner surface of the seal body has a generally conical configuration adjacent a first end of the seal body.

12. The camera of any of claims to 11, further comprising another sealing wall projecting radially outward from the outer radial surface of the seal body, the sealing wall being received between the flange of the cover and the lens support.

13. The camera of any of claims 9 to 12, wherein:
the seal body includes a first axial end and a second axial end, the second axial end directed toward an interior of the housing; and
the sealing wall has a radially inner end operatively connected to the seal body at a location adjacent to the second axial end of the seal body.

14. The camera of claim 13, wherein the inner end of the sealing wall is interconnected to the seal body by a connector, the connector having a generally C-shaped cross-section, a first end operatively connected to the inner end of the sealing wall and a second end connected to the seal body at a location adjacent to the second axial end of the seal body.

15. The camera of claim 14, wherein the seal body has a thickness and the connector has a thickness, the thickness of the body being greater than the thickness of the connector.

16. The camera of any of claims 9 to 15, wherein the sealing wall is operatively connected to the seal body at an intersection, the intersection having a thickness less than a thickness of the sealing wall.

17. A method of sealing an external environment from an interior of a camera, comprising:
supporting a lens assembly within a camera housing with a lens support, the lens assembly including a tubular housing having front and rear ends, and a lens element disposed at the front end of the lens assembly housing;
positioning a seal over an outer radial surface of the lens assembly housing, the seal including:
a generally cylindrical seal body including an outer radial surface and an inner radial surface radially spaced from the outer radial surface of the lens assembly housing;
a cylindrical tab projecting radially inward from the inner radial surface of the seal body, the tab engaging the outer radial surface of the lens assembly housing; and
a sealing wall projecting radially outward from the outer radial surface of the seal body;
positioning a camera housing cover over a forward opening in the camera housing, the camera housing cover including an inwardly projecting flange terminating at an end surface and having a passage formed therethrough for receiving a forward end of the lens assembly housing therein; and
capturing the sealing wall between the end surface of the flange of the housing cover and the lens support.
